# EUROPEAN PATENT SPECIFICATION

(11) **EP 0 533 399 B1**
(45) Date of publication and mention of the grant of the patent: **06.12.1995**
(21) Application number: 92308226.7
(22) Date of filing: 10.09.1992
(51) Int. Cl.: F16C 29/04

(54) **Mechanism for preloading linear bearing slides**
Mechanismus zur Vorspannung von Linearlagern
Mécanisme de précontrainte de paliers linéaires

(30) Priority: 18.09.1991 US 762515
(43) Date of publication of application: 24.03.1993
(73) Proprietor: AT&T Corp., New York, NY 10013-2412 (US)
(72) Inventor: Simons, Everett Furber, Cedar Knolls, New Jersey 07927 (US)
(74) Representative: Johnston, Kenneth Graham

(56) References cited:
- US-A- 4 923 311
- PATENT ABSTRACTS OF JAPAN vol. 10, no. 193 (M-496)(2249) 8 July 1986 & JP-A-61038215 (MATSUSHITA ELECTRIC IND CO LTD)

## Description

### Field of the Invention

This invention relates to linear slides and in particular to a mechanism for preloading the linear bearings and thereby relaxing the required tolerances of an outer member, bearing components and an inner member, concurrently reducing the backlash in the linear slide. This avoids the manual adjustments otherwise needed to compensate for dimensional variation and installation conditions.

### Background of the Invention

Linear slides are widely used to allow linear translational motion between members of mechanisms. These linear slides typically include adjustment elements for controlling clearances between the inner member and its guides. The adjustment elements are often used to apply a preload force to eliminate backlash and reduce compliance perpendicular to the direction of articulation. In the majority of these arrangements, compressive loading of the bearing elements between the outer member and inner member is provided by manual adjustment.

It is desirable to eliminate the need for manual adjustment in applications where the linear slides are not readily accessible or where frequent adjustment would otherwise be required due to the wear of constant use. Manual adjustment has the disadvantage that the adjustments may not be uniform in application or may be too tight or too loose. Manual adjustment has the additional disadvantage of being labor intensive and therefore expensive. Even a linear slide that is properly adjusted when free standing can, when installed, become too loose or become too tight to the point of binding, depending on the exact interface conditions of the installation.

One previous arrangement, disclosed in U. S. Patent 3,145,065, provides a compensating mechanism to prevent loss of accuracy in a rectilinear bearing assembly using balls and radially compliant longitudinal rods to support and guide the inner member within the outer member. The longitudinal rods are comprised of tubular members having a relatively large modulus of elasticity and a relatively high yield point. These tubular members are meant to compensate for loose tolerances in the ball assembly.

Another arrangement, disclosed in U.S. Patent 2,028,718, provides ball races formed by elastic steel bands in order to form a dust proof bearing. These steel bands are meant to reduce the need for accuracy in manufacture of the bearing since these bands tend to compensate for ball expansion.

A slide bearing support mechanism having one member slidable in a given direction relative to another member and including a pair of parallel slide bearing assemblies disposed between the members is disclosed in the generic U.S. patent 4,923,311. Each bearing assembly provides a raceway defining a travel path in the given direction; an elongated retainer disposed in the raceway; and a plurality of rollers disposed in the retainer and supported by the raceway which guides movement of the rollers along the travel path. Included is a loading mechanism located between the raceways and the rollers for applying loading forces directed transverse to the travel path. The loading mechanism comprising resilient means is retained under compression between one of the members and at least one of the raceways. The resilient loading mechanism efficiently provides a desired preload for the bearing assemblies. The raceways include surfaces formed by longitudinally extending grooves in the side of each bifurcation face and opposed longitudinally extending grooves in the sides of the other member with the rectangular grooves forming an elongated four cornered rectangular chamber and an elongated rectilinear rod positioned in each corner of the chamber.

These priorly disclosed mechanisms do not however provide a broad range of compensation such as would be needed to provide a high degree of accuracy without the need for manual adjustment or periodic re-adjustment.

According to the present invention, there is provided a slide as defined in claim 1.

A linear slide embodying the principles of the invention comprises an outer member, an inner member, first and second linear bearing mechanisms, a preloading bar and a longitudinal spring. The outer member has a primary channel opening for accepting an inner member, and two secondary channels, one in each side of the primary channel, for accepting linear bearing mechanisms. The inner member is located in the primary channel opening. First and second linear bearing mechanisms are located in the secondary channels. These linear bearing mechanisms support and guide the inner member in the primary channel opening in the outer member. The first linear bearing mechanism is conventionally constructed; it can consist of sliding elements or a plurality of rolling elements between two bearing ways, and resides in one of the secondary channels. The second linear bearing mechanism is in the other secondary channel. The preloading bar is contiguous with the second linear bearing mechanism along its entire length. The longitudinal spring is contiguous with the preloading bar on one side and the outer member on the other side. This longitudinal spring is used to provide a compressive force to the preloading bar to eliminate backlash and provide a predictable preload to the linear bearing mechanisms.

### Brief Description of the Drawing

In the drawing:
FIG. 1 is a pictorial view of a linear slide embodying the principles of the invention;
FIG. 2 is an end view of a linear slide having linear bearing mechanisms in accord with the invention, shown with its end plates removed;
FIG. 3 is a plan view of a linear slide having linear bearing mechanisms in accord with the invention;
FIG. 4 is a pictorial schematic of a longitudinal spring used in the linear slide disclosed in FIGS. 1 and 2; and
FIG. 5 is a pictorial view of a preloading bar used in the linear slide disclosed in FIGS. 1 and 2.

### Detailed Description

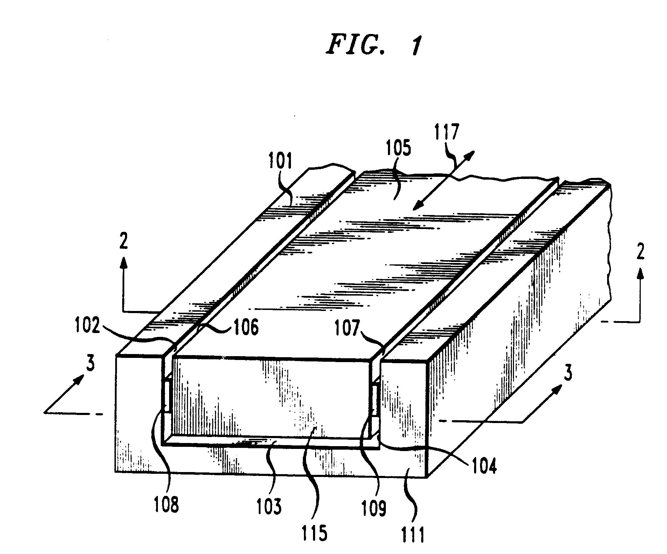

A linear slide is shown in pictorial form in FIG. 1. An outer member (101) includes a channel defined by the sides 102, 103 and 104 internal to the outer member. Located within the channel is an inner member (105) which translates substantially freely along the rectilinear path defined by the arrow 117. The inner member 105 is supported in and guided along the channel by linear bearing mechanisms between the opposite sides 106 and 107 of the inner member 105 and the channel sides 102 and 104. These linear bearing mechanisms are hidden by the covering end plates 111 and 115 attached to the outer member 101 and the inner member 105, respectively. The ends of retainers 108 and 109 for the rolling elements are shown between the inner member 105 and the outer member 101.

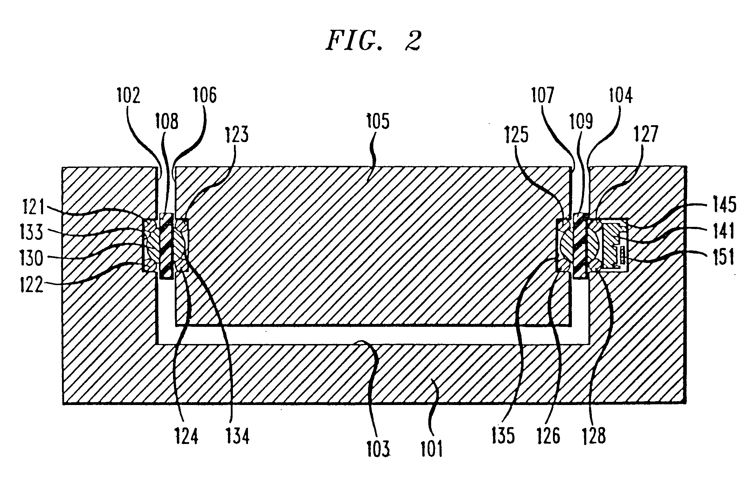

A vertical plane cross section (cross section cut 2 in FIG. 1) of this linear slide is shown in FIG. 2. First and second linear bearing mechanisms are located on opposite sides of the linear slide. The left linear bearing mechanism is conventional and includes bearing ways (rod pairs 121-122 and 123-124) in secondary channels 133 and 134, respectively, located in the channel wail 102 of the outer member and the side 106 of the inner member. These bearing ways or rods control the travel path of the rolling elements 130 running between the pair of bearing ways. A retainer 108 keeps the rolling elements equally spaced along the bearing ways 121-122 and 123-124.

The right linear bearing mechanism has one of its bearing ways (rod pair 125-126) in a secondary channel 135 in the side 107 of the inner member 105. The other bearing way (rod pair 127-128) is contiguous with a preloading bar 141 which is positioned in a secondary channel opening 145 in the side 104 of the primary channel in the outer member 101. A longitudinal spring 151, typically having a wave or substantially sinusoidal longitudinal contour, is positioned between the base of the secondary channel opening 145 and the preloading bar 141. The spring 151 applies compressive force against the preloading bar 141 which in turn applies force to the linear bearing mechanisms through the bearing way formed by rod pair 127-128.

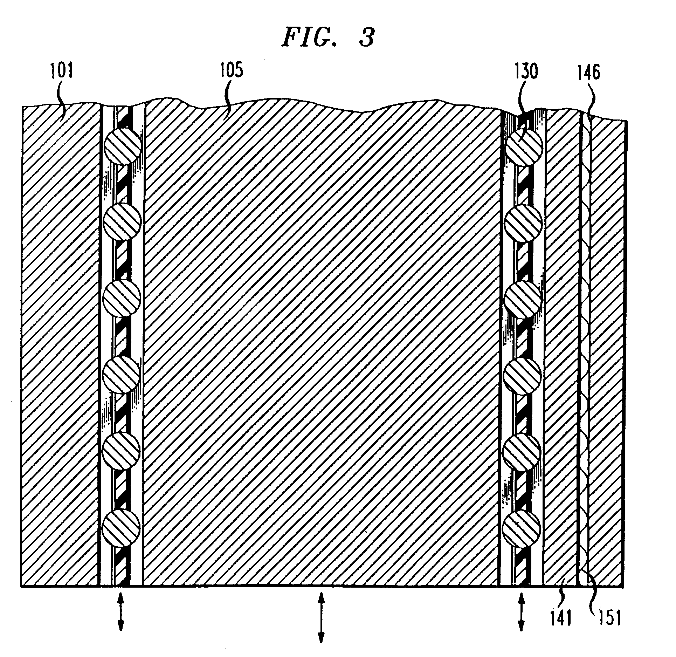

A horizontal cross section (cross section cut 3 in FIG. 1) of the linear slide is shown in FIG. 3. The inner member 105 is seen positioned in the primary channel of the outer member 101. The longitudinal spring 151 is shown located between the preloading bar 141 and the base 146 of the secondary channel so that alternate peaks of its typically sinusoidal or undulating contour are contiguous to the preloading bar 141 and secondary channel base 146. The spring applies a compressive force to the preloading bar to keep the linear slide in proper adjustment by eliminating backlash and providing a preload to the linear bearing mechanisms.

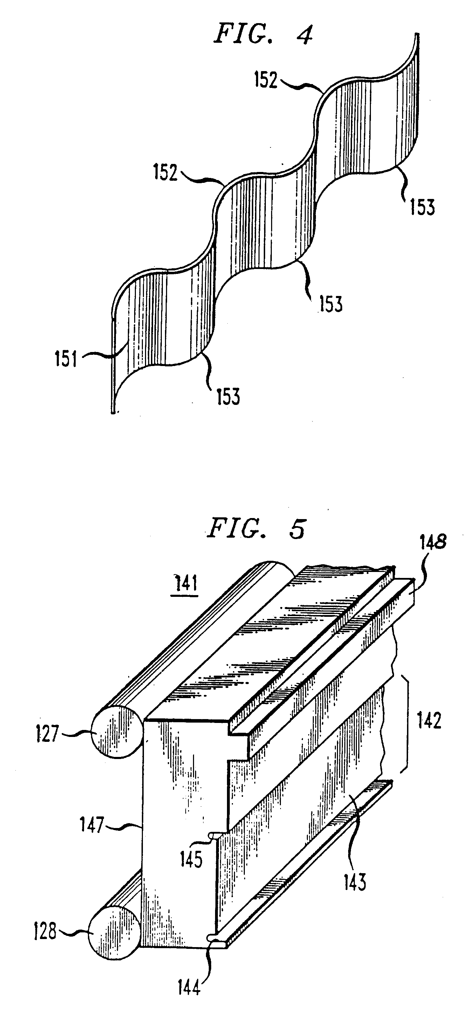

The longitudinal spring is shown in pictorial form in FIG. 4. This spring 151 typically has a sinusoidal or undulating shape with alternating peaks 152 and 153 distributed longitudinally along the length of the spring. This spring is constructed of a resilient material with a relatively high modulus of elasticity, such as spring steel. The alternating peaks apply force to the secondary channel base and to the preloading bar as shown in FIGS. 2 and 3 to keep the linear bearing mechanisms in proper adjustment. Longitudinal springs that can be used for this purpose are available commercially from the Smalley Steel Ring Company of Wheeling, Ill.

The preloading bar is shown in pictorial form in FIG. 5. The preloading bar 141 includes a shallow channel 142 with a base surface 143 to accept forces from the peaks of the spring and side walls 144 and 145 to control positioning of the spring. A longitudinal pedestal 148 is included to reduce the rotational compliance of the preloading bar relative to the outer member. The bearing way comprised of rods 127 and 128 is contiguous with the planar surface 147 of the preloading bar.

## Claims

1. A linear slide for a rectilinear motion device;
comprising:
an outer member (101) having a primary channel (102, 103 and 104) and an inner member (105) located within the primary channel;
first and second linear bearing mechanisms (121, 122, 123, 124, 125, 126, 127, and 128) on opposing sidewalls (102, 104) of the primary channel to support and guide the inner member;
a preloading bar (141) contiguous with the second linear bearing mechanism;
a longitudinal spring (151) having a substantially longitudinal sinusoidal contour and being extended longitudinally along the second linear bearing mechanism and located adjacent an inner surface of the outer member and positioned for applying a compressive force against the preloading bar;
the outer member including a secondary longitudinal channel (145) in the wall adjacent to the second linear mechanism into which the preloading bar and the longitudinal spring are inserted with the spring fitted between the base of the longitudinal channel and the preloading bar; and
CHARACTERIZED BY:
the preloading bar including a longitudinal groove (142) for accepting and positionally constraining the adjacent spring and a longitudinal pedestal (148) extending along the length of the preloading bar and in contact with a base surface (146) of the secondary longitudinal channel to supply a force operative to reduce rotational compliance of the preloading bar relative to the outer member.

## Patentansprüche

1. Geradführungsschlitten für eine Einrichtung mit geradliniger Bewegung, der folgendes umfaßt:
ein äußeres Glied (101) mit einem Hauptkanal (102, 103 und 104) und einem sich im Hauptkanal befindenden Innenglied (105);
erste und zweite Geradführungsmechanismen (121, 122, 123, 124, 125, 126, 127 und 128) an gegenüberliegenden Seitenwänden (102, 104) des Hauptkanals zum Stützen und Führen des Innenglieds;
einen an dem zweiten Geradführungsmechanismus angrenzenden Vorspannungsstab (141);
eine Längsfeder (151) mit einer im wesentlichen länglichen, sinusförmigen Kontur, wobei sich die Feder in Längsrichtung entlang dem zweiten Geradführungsmechanismus erstreckt, sich neben einer Innenfläche des äußeren Glieds befindet und so positioniert ist, daß sie auf den Vorspannungsstab eine Druckkraft ausübt,
wobei das äußere Glied in der neben dem zweiten Geradführungsmechanismus liegenden Wand einen Längsnebenkanal (145) enthält, in den der Vorspannungsstab und die Längsfeder eingesetzt sind, wobei die Feder zwischen dem Boden des Längskanals und dem Vorspannungsstab angebracht ist;
dadurch gekennzeichnet, daß
der Vorspannungsstab eine Längsnut (142) zur Aufnahme und Positionierungsbeschränkung der benachbarten Feder und einen sich über die Länge des Vorspannungsstabs erstreckenden Sockel (148) enthält, der mit einer Bodenfläche (146) des Längsnebenkanals in Berührung steht, um eine Kraft zur Verminderung der Drehnachgiebigkeit des Vorspannungsstabs gegenüber dem äußeren Glied auszuüben.

## Revendications

1. Glissière linéaire pour un dispositif à déplacement rectiligne;
comprenant :
un organe externe (101) ayant un canal primaire (102, 103 et 104) et un organe interne (105) situé à l'intérieur du canal primaire;
des premier et second mécanismes de palier linéaire (121, 122, 123, 124, 125, 126, 127 et 128) sur des parois latérales en regard (102, 104) du canal primaire pour supporter et guider l'organe interne;
une barre de précontrainte (141) contiguë avec le second mécanisme de palier linéaire;
un ressort longitudinal (151) ayant un contour sinusoïdal substantiellement longitudinal et s'étendant longitudinalement le long du second mécanisme de palier linéaire et situé adjacent à une surface interne de l'organe externe et positionné de manière à exercer une force de compression contre la barre de précontrainte;
l'organe externe comportant un canal longitudinal secondaire (145) dans la paroi adjacente au second mécanisme linéaire, dans lequel la barre de précontrainte et le ressort longitudinal sont insérés avec le ressort emboîté entre la base du canal longitudinal et la barre de précontrainte; et
caractérisé en ce que
la barre de précontrainte comporte une rainure longitudinale (142) pour recevoir et limiter en position le ressort adjacent et un appui longitudinal (148) s'étendant le long de la longueur de la barre de précontrainte et en contact avec une surface de base (146) du canal longitudinal secondaire pour fournir une force servant à réduire la docilité en rotation de la barre de précontrainte par rapport à l'organe externe.
